(19) Europäisches Patentamt
European Patent Office
Office européen des brevets

(11) EP 0 814 367 A2

(12) **EUROPEAN PATENT APPLICATION**

(43) Date of publication:
**29.12.1997 Bulletin 1997/52**

(51) Int. Cl.[6]: **G02F 1/1343**, G02F 1/1337, G02F 1/139, G02F 1/136

(21) Application number: **97109857.9**

(22) Date of filing: **17.06.1997**

(84) Designated Contracting States:
**AT BE CH DE DK ES FI FR GB GR IE IT LI LU MC NL PT SE**

(30) Priority: **17.06.1996 JP 155880/96**

(71) Applicant: **Frontec Incorporated**
**Sendai-shi, Miyagi-ken (JP)**

(72) Inventor: **Shin, Hyunho**
**Sendai-shi, Miyagi-ken (JP)**

(74) Representative:
**Klunker . Schmitt-Nilson . Hirsch**
**Winzererstrasse 106**
**80797 München (DE)**

(54) **Liquid crystal display**

(57) To provide a liquid crystal display device provided with the characteristics of a large angle of visibility wherein further, a transmissivity can be enhanced and driving at low voltage is enabled even if an interval between linear electrodes is relatively narrowed, a liquid crystal display device according to the present invention is provided with a pair of substrates arranged opposite to each oriented film, a liquid crystal layer and plural linear electrodes provided on one substrate in parallel at an interval of 5 to 20 μm and the liquid crystal display device according to the present invention is constituted so that the orientation of the oriented film on the substrate on the side on which the linear electrodes are formed is tilted by 5 to 25° in the direction of the length of the linear electrode, the orientation of the oriented film on the substrate on the other side and the direction of the length of the linear electrode are crossed at the angle of 15° or less and the value of $\Delta nd$ in case the thickness of the liquid crystal layer is set to d and the anisotropy of the refraction index of the liquid crystal layer is set to $\Delta n$ is in the range of 0.28 to 0.45 μm.

FIG. 4

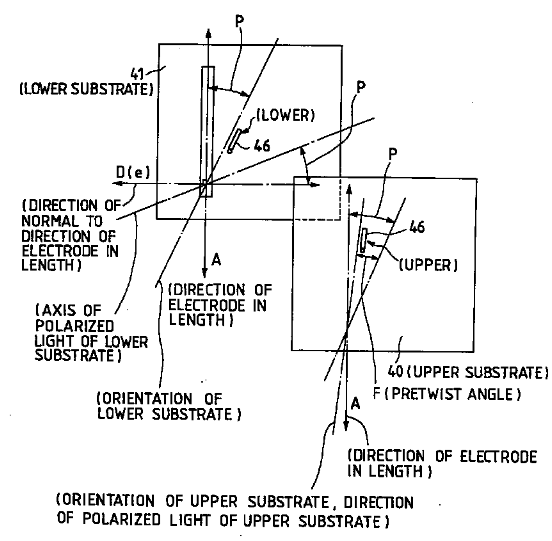


EP 0 814 367 A2

## Description

### BACKGROUND OF THE INVENTION

The present invention relates to a liquid crystal display device used for a liquid crystal display for displaying various images and others, particularly relates to a liquid crystal display device whose transmissivity is high, which can be driven at low voltage and in which the allowable range of a gap between cells is large.

A liquid crystal display is widely used as a display which can be lightened, miniaturized and thinned and above all, a twisted nematic mode (TN mode) active matrix liquid crystal display is widely known as a display which can be driven at low voltage, requires only a little power consumption, the contrast of which is high and in which the quality of an image can be enhanced.

In this type of general TN mode liquid crystal display device, two glass substrates each of which is provided with a polarizing plate, a transparent electrode and an oriented film are arranged oppositely with an interval between them so that the orientation of the respective oriented films is different by 90° and nematic liquid crystal is provided between the two glass substrates so that it is oriented with it twisted by 90°.

However, recently a problem of dependence upon the angle of visibility in this type of TN mode liquid crystal device occurs. Fig. 14 shows general dependence upon the angle of visibility of a TN mode liquid crystal display device and a part shown by diagonal lines in Fig. 14 shows a range in which a contrast (CR) is 10 or more. As shown in Fig. 14, a TN mode liquid crystal display device provides satisfactory visibility horizontally, however, it is clear that the above device can provide only extremely bad visibility vertically, particularly upward.

The applicant of the present invention applies Japanese published unexamined patent application No. Hei 7-306276 which discloses a liquid crystal display device provided with epoch-making structure which can solve such a problem.

According to technique related to the contents of the application, an electrode for driving liquid crystal is not respectively provided to both the upper and lower substrates between which liquid crystal is put, but two types of linear electrodes 12 and 13 with different polarity are provided to only the lower substrate 11 shown in Fig. 15 at a sufficient interval, as shown in Fig. 16, no electrode is provided to the upper substrate 10 and liquid crystal molecules 36 can be oriented in the direction of an electric field generated between both linear electrodes 12 and 13 by applying voltage.

Further in detail, a comb electrode 16 is constituted by connecting the linear electrodes 12 on a base line 14, a comb electrode 17 is constituted by connecting the linear electrodes 13 on a base line 15, the linear electrodes 12 and 13 of both comb electrodes 16 and 17 are arranged so that the linear electrodes are alternately adjacent and engaged without being touched, and a power source 18 and a switching device 19 are connected to the base lines 14 and 15.

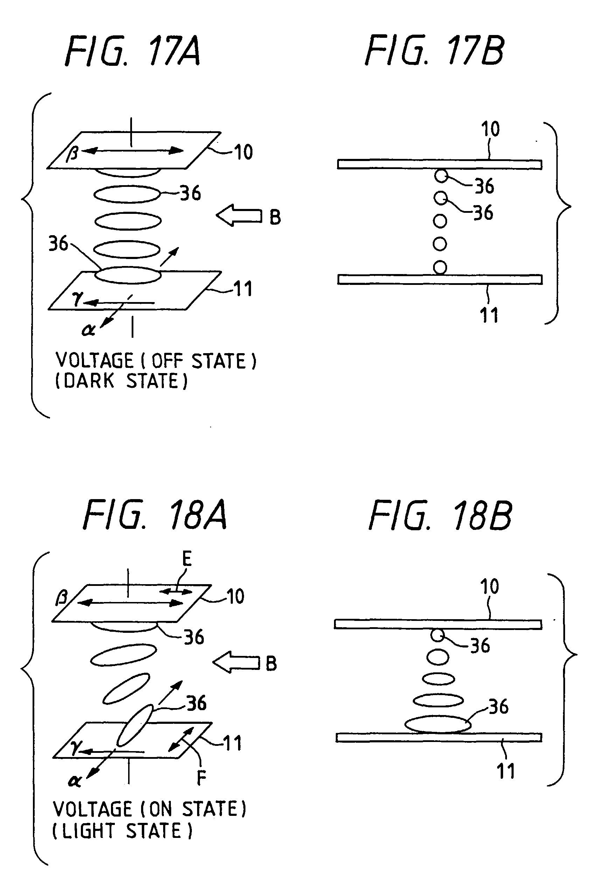

As shown in Fig. 17A, an oriented film is formed on the surface on the liquid crystal side of the upper substrate 10, orientation processing is executed so that liquid crystal molecules 36 are oriented in the direction $\beta$ in the film, an oriented film is formed on the surface on the liquid crystal side of the lower substrate 11, orientation processing is executed so that liquid crystal molecules 36 are oriented in the direction $\gamma$ parallel to the above direction $\beta$ in the film, a polarizing plate the direction of polarization of which is the direction $\beta$ shown in Fig. 17A is laminated on the substrate 10 and a polarizing plate the direction of polarization of which is the direction $\alpha$ is laminated on the substrate 11.

According to the above constitution, liquid crystal molecules 36 are homogeneously oriented in the same direction as shown in Figs. 17A and 17B in a state in which no voltage is applied between the linear electrodes 12 and 13. When a beam of light transmitted through the lower substrate 11 in this state is polarized in the direction $\alpha$ by the polarizing plate, transmitted through a layer consisting of liquid crystal molecules 36 and reaches the polarizing plate for polarizing in the direction $\beta$ which is different from the direction of polarization of the upper substrate 10, the beam is screened by the polarizing plate and a liquid crystal display device is in a dark state because the beam is not transmitted through the liquid crystal display device.

Next, when voltage is applied between the linear electrodes 12 and 13, the orientation of liquid crystal molecules 36 close to the lower substrate 11 out of liquid crystal molecules is oriented perpendicularly to the longer direction of the linear electrode 12. That is, electric lines of force in the direction perpendicular to the longer direction of the linear electrodes 12 and 13 are generated and a liquid crystal molecule 36 the longer direction of which is oriented in the direction $\gamma$ by the oriented film formed on the lower substrate 11 is oriented in the direction $\alpha$ perpendicular to the direction $\gamma$ by the stronger regulating force of an electric field than the regulating force of the oriented film.

Therefore, when voltage is applied between the linear electrodes 12 and 13, the longer axis of a liquid crystal molecule is oriented so that it is twisted by 90° as shown in Figs. 18A and 18B. In this state, the polarized direction of a polarized beam which is transmitted through the lower substrate 11 and polarized in the direction $\alpha$ is converted by twisted liquid crystal 36, can be transmitted through the upper substrate 10 on which the polarizing plate in the direction $\beta$ different from the direction $\alpha$ is provided and the liquid crystal display device is converted to a light state.

In the meantime, if an interval between each linear electrode 12 and each linear electrode 13 is set wide, a high transmissivity cannot be obtained unless driving voltage is increased. To reduce driving voltage and obtain a high transmissivity, an interval between the linear electrodes and the width of each electrode are required to be reduced, it requires technique at a high level of the minuteness of wiring technique in the current thin film formation process to thin each linear electrode and reduce an interval between linear electrodes by reducing an interval between linear electrodes to 2.6 μm, the width of each electrode to 1.4 μm or reducing an interval between linear electrodes to 5 μm and the width of each electrode to 2 μm and a manufacturing yield may be remarkably deteriorated.

## SUMMARY OF THE INVENTION

The present invention is made to solve the above problem and the object is to provide a liquid crystal display device provided with the characteristics of a large angle of visibility wherein a transmissivity can be further enhanced and driving at low voltage is enabled even if an interval between linear electrodes is relatively narrowed.

To solve the above problem, the present invention comprises a pair of substrates to each of which an oriented film is provided and these oriented films are arranged opposite, a liquid crystal layer consisting of nematic liquid crystal and plural linear electrodes provided on one substrate with them mutually in parallel at an interval in the range of 5 to 20 μm under the above oriented film provided on the above one substrate, wherein the above plural linear electrodes are formed so that the longer axis of a liquid crystal molecule on the side close to the substrate provided with the linear electrodes out of plural liquid crystal molecules existing in the direction of the length of the above liquid crystal layer is oriented in the direction of an electric field generated between the plural adjacent linear electrodes when voltage is applied, the oriented film on the one substrate provided with the plural linear electrodes is formed so that the longer axis of a liquid crystal molecule on the side close to the substrate provided with the linear electrodes out of plural liquid crystal molecules constituting the above liquid crystal layer and the direction of the length of each linear electrode are crossed in the range of the angles of 5 to 25° on a plane in parallel to the substrates when no voltage is applied to the plural linear electrodes, the oriented film on the other substrate is formed so that the longer axis of a liquid crystal molecule on the side close to the other substrate is tilted and the liquid crystal molecules are oriented in the range of the angles within 15° from the direction of the longer axis of the liquid crystal molecule on the side of the linear electrode to the direction in which the linear electrode is extended when no voltage is applied, and the value of Δnd in case the thickness of the liquid crystal layer is set to d and the anisotropy of the refractive index of the liquid crystal layer is set to Δn is in the range of 0.28 to 0.45 μm.

As in the above constitution, a liquid crystal molecule itself is also influenced by an electric field when the orientation of the liquid crystal molecule on the side close to the substrate provided with the linear electrodes is changed to the direction of the electric field by the application of voltage to the linear electrode and an angle of torsion required for a predetermined twisted nematic mode liquid crystal layer, for example 90° cannot be obtained, it is desirable that Δnd is in the range of 0.28 to 0.45 μm to hold a predetermined angle of torsion of the liquid crystal layer and to enhance a transmissivity.

It is because driving voltage is increased at an angle of less than 5°, there may be some liquid crystal molecules the twisted direction of which is undetermined when liquid crystal molecules are twisted if an electric field is applied and hereby, a drain may be formed that the longer axis of a liquid crystal molecule on the side close to the above substrate provided with the linear electrodes is tilted by 5 to 25° to the direction of the length of the linear electrode. Further, when the above angle exceeds 25°, a twist between liquid crystal molecules on the side of one substrate and those on the side of the other substrate does not readily meet an angle required by nematic liquid crystal when an electric field is applied, a contrast is readily deteriorated and to obtain a satisfactory contrast, driving voltage is required to be increased.

Next, it is because a contrast is satisfactory in the range that the oriented film on the above other substrate is formed so that the longer axis of a liquid crystal molecule on the side close to the other substrate is tilted and the liquid crystal molecules are oriented in the range of the angles within 15° from the direction of the longer axis of a liquid crystal molecule on the side of the linear electrode to the direction in which the linear electrode is extended when no voltage is applied.

Next, to solve the above problem, the present invention is characterized in that liquid crystal molecules are oriented by tilting the longer axis of a liquid crystal molecule on the side close to the above other substrate in the range of the angles of 5 to 10° from the direction of the longer axis of a liquid crystal molecule on the side of the linear electrode to the direction in which the linear electrode is extended.

It is because the responsibility of a liquid crystal molecule when an electric field is applied can be enhanced if a satisfactory contrast is held that the above angle is set to the range of 5 to 10°. If the longer axis of a liquid crystal molecule on the side close to the other substrate is tilted and liquid crystal molecules are oriented in the range of the angles of 5 to 10°, a twist is readily caused and response speed is enhanced because a liquid crystal molecule is a little twisted beforehand when it is twisted along an electric field.

According to the present invention, to solve the above problem, it is desirable that the value of the above Δnd is in the range of 0.34 to 0.38 μm to obtain the maximum transmissivity.

Next, according to the present invention, to solve the above problem, it is desirable that the linear electrode in the above constitution is constituted by first linear electrodes provided in parallel and plural second linear electrodes provided in parallel to the these first linear electrodes and opposite to each first linear electrode and alternated with the first linear electrodes for generating potential in cooperation with these opposite electrodes.

## BRIEF DESCRIPTION OF THE DRAWINGS

Fig. 1A shows the schematic structure of a liquid crystal display device and the oriented state of liquid crystal molecules in a state in which no electric field is applied in a first embodiment according to the present invention, and Fig. 1B shows the schematic structure of a liquid crystal display device and the oriented state of liquid crystal molecules in case viewed from the direction shown by an arrow B in Fig. 1A;

Fig. 2A shows the schematic structure and the oriented state of liquid crystal molecules in a state in which an electric field is applied in the first embodiment according to the present invention and Fig. 2B shows the schematic structure and the oriented state of liquid crystal molecules in case viewed from the direction shown by an arrow B in Fig. 2A;

Fig. 3A shows the relationship between the arranged directions of linear electrodes and the oriented directions of the upper and lower liquid crystal molecules in the first embodiment according to the present invention and Fig. 3B shows the transformed example;

Fig. 4 shows the relationship among the oriented direction of an oriented film, the direction of the polarizing axis, the orientation deflection angle and the pre-twist angle of a polarizing plate in a liquid crystal display in the transformed example according to the present invention;

Fig. 5 shows an example of a liquid crystal driving circuit pattern used for the liquid crystal display according to the present invention;

Fig. 6 is a sectional view showing the liquid crystal driving circuit pattern shown in Fig. 5 formed on a substrate;

Fig. 7 shows dependence upon the angle of visibility obtained by the liquid crystal device in the first embodiment;

Fig. 8 shows dependence upon $\Delta nd$ in a transmissivity obtained in the liquid crystal display device in the first embodiment;

Fig. 9 shows dependence upon driving voltage in a transmissivity obtained in the liquid crystal display device in the first embodiment;

Fig. 10 shows dependence upon driving voltage in a transmissivity in case the angle of pre-twist and an angle P are varied in the liquid crystal display device in the first embodiment;

Fig. 11 shows the relationship between an orientation deflection angle and driving voltage in the liquid crystal display in the first embodiment;

Fig. 12 shows dependence upon driving voltage in a transmissivity obtained in the liquid crystal display in the first embodiment;

Fig. 13 shows dependence upon driving voltage in a transmissivity obtained in a liquid crystal display in another embodiment;

Fig. 14 shows dependence upon the angle of visibility of a liquid crystal display device in the prior embodiment;

Fig. 15 is a plan showing a substrate provided with linear electrodes combined in the shape of a comb disclosed in Japanese patent application No. Hei 7-306276;

Fig. 16 is a sectional view showing the oriented state of liquid crystal molecules in case voltage is applied to a linear electrode disclosed in Japanese patent application No. Hei 7-306276;

Fig. 17A shows the orientation of liquid crystal in a dark state disclosed in Japanese patent application No. Hei 7-306276 and Fig. 17B is a side view in case viewed from the direction shown by an arrow B in Fig. 17A; and

Fig. 18A shows the orientation of liquid crystal in a light state disclosed in Japanese patent application No. Hei 7-306276 and Fig. 18B is a side view in case viewed from the direction shown by an arrow B in Fig. 18A.

## DESCRIPTION OF THE PREFERRED EMBODIMENTS

Referring to the drawings, an embodiment according to the present invention will be described below.

Figs. 1 and 2 show the main part of a liquid crystal display device according to the present invention, the upper substrate 40 and the lower substrate 41 are arranged opposite in parallel with them separated by a predetermined interval (a cell gap) as shown in Figs. 1 and 2 and a liquid crystal layer 42 is provided between the substrates 40 and 41 and polarizing plates 43 and 44 are arranged on the respective outer surfaces of the substrates 40 and 41.

These substrates 40 and 41 are made of a transparent substrate such as glass, however, in actual constitution, a liquid crystal layer 42 is formed by surrounding the periphery of the substrates 40 and 41 with sealant not shown and housing liquid crystal in space surrounded by the substrates 40 and 41 and the sealant and a liquid crystal cell 45 is constituted by combining the substrates 40 and 41, the liquid crystal layer 42 and the polarizing plates 43 and 44.

The constitution shown in Figs. 1 and 2 simply shows only a part of an actual liquid crystal cell 45 and multiple liquid crystal molecules 46 exist in an actual liquid crystal layer 42, however, in Figs. 1 and 2, only a column of liquid crystal molecules 46 which exist in the direction of the thickness of the liquid crystal layer 42 are typically shown. Linear electrodes with structure equivalent to the linear electrodes 12 and 13 shown in Fig. 15 are formed on the side of the liquid crystal layer 42 of the lower substrate 41. The linear electrodes 12 and 13 used in this example may be a metallic electrode which blocks off light or a transparent electrode, however, if a normally black type display method described later is adopted, it is desirable that a transparent electrode consisting of indium tin oxide (ITO) and others is used.

Further, in a liquid crystal display in this example, an oriented film is provided on the side of the liquid crystal layer 42 of the lower substrate 41 and orientation processing is executed in the direction shown by an arrow E in Fig. 1 so that this oriented film forms an angle P shown in Fig. 3 in the range of +5° to +25° or -5° to -25° to the direction A of the length of the linear electrodes 12 and 13. For the oriented film of the upper substrate 40, orientation processing is executed in the direction shown by an arrow A substantially parallel to the direction of the length of the linear electrodes 12 and 13.

That is, by the above orientation processing, liquid crystal molecules 46 existing between the substrates 40 and 41 are homogeneously oriented in a state in which an electric field acts upon none with their longer axis kept on a plane parallel to the substrates 40 and 41, with the longer axis of liquid crystal molecules 46 close to the upper substrate 40 directed in the direction shown by the arrow A and with the longer axis of liquid crystal molecules 46 close to the lower substrate 41 directed to the direction shown by the arrow E. Figs. 1 and 3A show this state, however, in Fig. 3A, a liquid crystal molecule 46 shown by a word "upper" shows the direction of a liquid crystal molecule nearest to the upper substrate 40 and a liquid crystal molecule 46 shown by a word "lower" shows the direction of a liquid crystal molecule nearest to the lower substrate 41.

The direction of the polarizing axis of the upper polarizing plate 43 and the orientation processing direction of the upper substrate 40 in this example are both directed in the direction shown by the arrow A, that is, the direction parallel to the direction of the length of the linear electrodes 12 and 13 and the direction of the polarizing axis of the lower polarizing plate 44 is tilted by an angle (in other words, an angle tilted by an angle P to the direction of an electric field e) tilted by an angle P from the direction perpendicular to the direction of the length of the linear electrodes 12 and 13.

Therefore, in the liquid crystal display in this example, in a state in which an electric field acts upon none, liquid crystal molecules 46 close to the lower substrate 41 is oriented to the linear electrodes 12 and 13 by an angle P as shown in Fig. 1, however, as liquid crystal molecules 46 close to the upper substrate 40 are oriented in parallel to the linear electrodes 12 and 13, a pre-twist (F: equal to an angle P in this case) is applied to plural liquid crystal molecules 46 lined up in the direction of the thickness of the liquid crystal layer.

Fig. 2 shows a state in which the linear electrodes 12 and 13 are electrified to generate an electric field between the electrodes 12 and 13 and liquid crystal molecules 46 are oriented by an electric field, however, as an electric field is generated in the direction perpendicular to the direction A of the length of the linear electrodes 12 and 13 between the linear electrodes 12 and 13 in this state, that is, in the direction shown by an arrow D(e) in Fig. 2A, liquid crystal molecules 46 are oriented with the longer axis directed to the direction e of an electric field, that is, in the direction D in an area in which force which regulates orientation in an electric field exceeds force which regulates the orientation of the oriented film. Force which regulates the orientation of an electric field is weaker than that on the side of the lower substrate 41 because it is far from the linear electrodes 12 and 13 as the upper substrate 40 approaches and as a result, plural liquid crystal molecules 46 existing in the direction of the thickness of the liquid crystal layer 42 are twisted between the substrates 40 and 41 as shown in Fig. 2.

As a beam of light which is transmitted in the liquid crystal cell 45 can be screened in a state shown in Fig. 1 in which an electric field is not applied and a beam of light is transmitted in the liquid crystal cell 45 in a state shown in Fig. 2 in which an electric field is applied based upon the above relationship in the control of orientation of liquid crystal molecules 46, a transmitted beam can be controlled according to the on and off of an electric field and a display type called normally black can be selected by switching a dark state and a light state.

In the prior structure in which liquid crystal molecules 46 are controlled so that they are raised, there is a problem that dependence upon a visual angle to a liquid crystal molecule is caused and a contrast is reduced in case viewed diagonally, however, in the above structure, as a transmitted state and a screened state are switched with the longer axis of liquid crystal molecules 46 parallel to the substrates 40 and 41, dependence upon a visual angle is hardly caused.

Next, it is desirable that an interval between the above linear electrodes 12 and 13 is in the range of 5 to 20 μm and the value of $\Delta nd$ in case the thickness of a liquid crystal layer is set to d and the anisotropy of the refractive index of the liquid crystal layer is set to $\Delta n$ is in the range of 0.28 to 0.45 μm and particularly, in the range of 0.34 to 0.38 μm.

If an interval between linear electrodes is narrower than 5 μm, wiring technique at a high level is required in the current thin film manufacturing process, a manufacturing yield may be deteriorated and if the above interval exceeds 20 μm, it is not desirable because driving voltage is increased. A high transmissivity can be obtained by setting the value of $\Delta nd$ to 0.28 to 0.45 μm and above all, a high transmissivity can be obtained in the range of 0.34 to 0.38 μm.

For the above orientation deflection angle c, there are two types of a case in which an orientation deflection angle is a clockwise angle to the direction of the length of a linear electrode as shown in Fig. 3 and a case in which it is a counterclockwise angle. For these two types, in this specification, a clockwise angle is defined as '+' and a counterclockwise angle is defined as '-'. Therefore, a clockwise orientation deflection angle c is in the range of +5 to + 25° and a counterclockwise orientation deflection angle c is in the range of -5 to - 25°.

Next, as a transformed example of this example, structure shown in Fig. 3B may be also adopted. In the structure shown in Fig. 3A, when an electric field is not applied, orientation processing is applied to the oriented film of the upper substrate 40 so that liquid crystal molecules 46 close to the upper substrate 40 are oriented in the direction parallel to the direction A (the direction of the length of the linear electrodes 12 and 13), while the structure shown in Fig. 3B is characterized in that orientation processing is applied to the oriented film of the upper substrate so that liquid crystal molecules 46 close to the upper substrate are oriented not in the direction A but in the direction A' tilted by a predetermined angle to the direction A.

Also, in the structure shown in Fig. 3B, orientation processing is applied to the oriented film of the lower substrate so that liquid crystal 46 close to the lower substrate is oriented in the direction tilted by an angle P to the direction A of the length of the linear electrodes 12 and 11 as the case shown in Fig. 3A.

Therefore, in the structure shown in Fig. 3B, as liquid crystal 46 close to the lower substrate is tilted by an angle P when an electric field is not applied and liquid crystal 46 close to the upper substrate is oriented in parallel to the direction A', a pre-twist is also applied in this example and liquid crystal lined up between the upper and lower substrates is oriented with it tilted by a predetermined pre-twist angle (F).

The structure shown in Fig. 3A is an example in case the angle (F) of a pre-twist and an angle P are the same ( $P = F$ ) and the structure shown in Fig. 3B is an example in case the angle (F) of a pre-twist and an angle P are different ($P \neq F$).

Fig. 4 shows the relationship among the direction of the polarizing axis of the upper and lower substrates, the orientation of the oriented film, an orientation deflection angle and a pre-twist angle in the structure shown in Fig. 3B for facilitating understanding.

As shown in Fig. 4, the orientation of the oriented film of the lower substrate 41 is tilted by an angle P to the direction A of the length of the linear electrodes 12 and 13 and the direction of the polarizing axis of the polarizing plate laminated on the lower substrate 41 is tilted by approximately an angle P counterclockwise in Fig. 4 to the direction (the direction of an electric field generated by a linear electrode) of a normal to the direction A of the length of the linear electrodes 12 and 13. The orientation of the oriented film of the upper substrate 40 is tilted by a pre-twist angle F to the direction parallel to the orientation of the lower substrate and the polarizing axis of the polarizing plate of the upper substrate is directed in the same direction as this orientation.

In these examples, like the prior example, for the angle P of a liquid crystal molecule 46 close to the lower substrate 41, there are a case of '+' and a case of '-' and the angle is in the range of +5 to + 25° or in the range of -5 to -25° as in the above example. Further, assuming that a clockwise case shown in Fig. 3 is '+', it is desirable that a pre-twist angle is in the range of 0 to 15° and assuming that a counterclockwise case is '-', it is desirable that a pre-twist angle is in the range of - 15 to 0°.

It need scarcely be said that the upper and lower substrates 40 and 41 may be arranged reversely in a liquid crystal deice provided with the above structure.

Figs. 5 and 6 show an example of a liquid crystal driving circuit pattern applied to a liquid crystal display device according to the present invention, Fig. 5 is a plan showing the main part of a wiring pattern and Fig. 6 shows sectional structure.

For the structure in this example, plural gate wiring 141 and signal wiring 142 are formed in a matrix on a transparent substrate 140 consisting of glass and others and a comb electrode 143 and an electrode 144 are arranged in an area surrounded by the gate wiring 141 and the signal wiring 142. The above electrode 143 is formed in the shape of a comb by connecting two linear electrodes 145 arranged in parallel close to the signal wiring 142 via a base line portion 146 arranged in parallel to the gate wiring 141 close to it on their base side in this example. The linear electrode 144 consists of a linear electrode 147 arranged in parallel to the above two linear electrodes 145 in the center of them, a base line portion 148 connected to the base of the linear electrode 147 and arranged in parallel to the gate wiring 141 and a linear capacity generating section 149 connected to the end of the linear electrode 147 and adjacent to the gate wiring 141 and the capacity generating section 149 is formed over the above base line portion 146 via an insulating film 153 described later so that the section is overlapped with the base line portion. Further, a switching device 151 is provided in a part close to the signal wiring 142 of the above gate wiring 141.

As shown in Fig. 6, the actual laminate structure of this circuit is top gate structure in which an island light screening film 152 is provided on the transparent substrate 140, a semiconductor film 154 is formed on it via an insulating film 153, a gate electrode 156 is formed on the center of the semiconductor film 154 via an insulated portion 155, silicide layers 157 are formed on both sides of the insulated portion 155, a source electrode 158 and a drain electrode 159 are provided with them respectively in contact with these silicide layers 157 and an insulating film 160 is formed on these. The above gate electrode 156 is formed using a part of the gate wiring 141. The above linear electrodes 145 are formed to be on the same plane as the light screening layer 152 on the substrate 140, the insulating film 153 is provided on them, the linear electrode 147 is formed on this insulating film 153 and the base line portion 148 of the linear electrode 147 is connected to the drain electrode 159. The above linear electrodes 145 and 147 are both formed by a transparent conductive layer consisting of indium tin oxide (ITO) or a metallic electrode layer and the light screening film 152 is formed by a light screening conductive metallic film.

Next, as the structure shown in Figs. 5 and 6 is applied to the liquid crystal display device already described based upon Figs. 1 and 2, the above circuit can be built in the liquid crystal display device by constituting the lower substrate 41 shown in Fig. 1 as the substrate 140 shown in Fig. 11, a substrate 139 constituted as the substrate 40 on the opposite side used in the structure shown in Figs. 1 and 2 is provided over this substrate 140 via a liquid crystal layer and a liquid crystal display is constituted.

Actually, an oriented film is formed on an insulating film 160 over the substrate 140, orientation processing in the direction E shown in Fig. 1 is applied to the oriented film, an oriented film is also formed on the surface on the side of the liquid crystal layer of the substrate 139 and orientation processing in the direction A is applied to the oriented film.

In the circuit provided with the above structure, it can be switched by the actuation of the switching device 150 whether voltage is applied between the linear electrodes 145 and 147 or not.

Therefore, an electric field can be applied in the direction D shown in Fig. 2 by actuating the switching device 150 and applying voltage between the linear electrodes 145 and 147 and hereby, liquid crystal molecules 46 can be twisted (light state) between the upper and lower substrates as shown in Fig. 2. Liquid crystal molecules 46 can be twisted (dark state) only by an angle P parallel to the substrate as shown in Fig. 1 by preventing voltage from being applied between the linear electrodes 145 and 147.

Therefore, the orientation of liquid crystal molecules 46 can be controlled using the circuit shown in Fig. 5 and 6 as shown in Figs. 1 and 2 and a beam of light from a backlight can be switched to a dark state or a light state depending upon the orientation controlled state of liquid crystal molecules by leading a beam of light from the backlight from under the substrate 140 shown in Fig. 6. When the switching device 150 is electrified, an electron and a hole are generated in the semiconductor layer 154 under the insulated portion 155 by an electric field generated by the gate electrode 156 to be a channel and conduction is performed because the generated electron moves through this channel.

As liquid crystal molecules 46 are basically oriented in parallel to a substrate both in case an electric field is applied and in case it is not applied and a state in which they are twisted is only changed, a high speed response is enabled and dependence upon the angle of visibility is also reduced.

Further, when the linear electrodes 145 and 147 are constituted by a transparent electrode film and a normally black type display method is realized, liquid crystal molecules 46 over the linear electrodes 145 and 147 are raised as shown in Fig. 16 if voltage is applied to the linear electrodes 145 and 147, however, as this portion is also in a light state in which a beam of light from the backlight is transmitted to some extent, the portion over the linear electrodes 145 and 147 also contributes to display and hereby, a numerical aperture as a liquid crystal display device can be enhanced.

Furthermore, as display is in a dark state if no voltage is applied to the linear electrodes 145 and 147, the state of liquid crystal over the linear electrodes 145 and 147 has no particular adverse effect upon dark state display.

First Embodiment

A thin film transistor circuit provided with a linear electrode in the shape of a comb shown in Figs. 5 and 6 is formed on one of two transparent glass substrates each of which is 1.1 mm thick and the surface of each of which is polished, further a polyimide oriented film is formed on it, a polyimide oriented film is also formed on the other substrate, orientation processing for orienting liquid crystal by rubbing processing is applied to the respective oriented films, liquid crystal is injected into a gap between the substrates with the two transparent substrates arranged opposite at a predetermined interval via beads for forming the gap and a liquid crystal cell is completed by joining by sealant.

The direction of orientation processing applied to each substrate is the same as in the example of the constitution shown in Fig. 1, the orientation of the oriented film of the lower substrate is directed so that it is +10° to the direction of the length of the linear electrode of the lower substrate with the substrate on the side on which the electrode in the shape of a comb is formed set as the lower substrate and the substrates are joined so that the oriented film of the upper substrate is oriented in the same direction tilted by +10° (homogeneous direction). The liquid crystal sealed between the substrates is nematic liquid crystal the dielectric constant $\Delta\varepsilon$ of which is 7.3 and the value of $\Delta nd$ in this case is 0.4 μm.

Further, the width of the linear electrode is set to 5 μm, an interval between the linear electrodes is set to 12 μm and the linear electrode is constituted by ITO.

In the above structure, the angle P is +10° and the angle of a pre-twist is 0°. A polarizing plate is respectively arranged outside the upper and lower substrates.

Fig. 7 shows the result of measuring an equicontrast curve in the liquid crystal display constituted as described above. Numbers 10, 20, 30, 40 and 50 added around the axis of ordinate and the axis of abscissa in Fig. 7 respectively denote an angle tilted from a normal of a screen and (0), (90), (-90) and (180) respectively denote orientation on a screen.

As clear from the result shown in Fig. 7, it is clear that an area in which a contrast is 40 (CR40) or more or 50 (CR50) or more accounts for 50° or more in all directions in a liquid crystal display according to the present invention. The measuring limit value of equipment used for measuring dependence upon the angle of visibility in this embodiment is 50° in all directions and the measurement of the respective equicontrast curves of contrasts 30, 20 and 10 was tried, however, these equicontrast curves could not be drawn in an area within 50°. That is, according to the above structure, it is clear that the equicontrast curve of the contrast 30 exists in an area which exceeds the angle of visibility of 50° and that a by far larger angle of visibility can be obtained than heretofore in the above structure.

Fig. 8 shows the result of the relationship between a transmissivity and Δnd in the liquid crystal display according to the present invention.

Liquid crystal displays in which the width of a linear electrode is set to 5 μm, the interval between the electrodes is set to 20 μm and the same type liquid crystal are used.

It is proved that a high transmissivity can be obtained by adopting the structure according to the present invention even if Δnd is a little fluctuated and it is clear that the obtained transmissivity itself is also sufficiently satisfactory. Therefore, the structure according to the present invention is characterized in that the allowable range of an interval (a cell gap) between the upper and lower substrates is expanded and the fluctuation of a transmissivity caused by an interval between substrates is reduced.

Fig. 9 shows the result of measuring dependence upon driving voltage of the respective transmissivities in case an interval between electrodes/the width of an electrode is set to 12 (μm)/5 (μm), 14/3 and 20/5 in case a linear electrode is formed by ITO and formed by a metallic electrode consisting of Cr in the structure in the above embodiment.

As a result, it is clear in case of a normally black type display method is adopted that if an electrode is formed by ITO in place of a metallic electrode, a transmissivity is satisfactory. It is clear in case the width of an electrode is fixed that if an interval between electrodes is small, driving voltage can be reduced.

Fig. 10 shows the result of measuring the relationship between a transmissivity and driving voltage in case an interval between electrodes is set to 20 μm, the width of an electrode is set to 5 μm, a pre-twist angle is set to 0° and an orientation deflection angle is respectively set to 0°, 5°, 10°, 15°, 20° and 25°. In this embodiment, irregularities provided with an inclined face are formed on the respective oriented films respectively formed on the upper and lower substrates and the pretilt angle of a liquid crystal molecule is set to 1° so that liquid crystal molecules are a little tilted in the direction of the thickness of a liquid crystal layer and raised.

It is clear from the result shown in Fig. 10 that when an angle P is set to 0° with a pre-twist angle 0°, driving voltage is increased than in a case in which the angle P is set in the range of +5° to +25°. Hereby, it is proved that it is desirable to reduce driving voltage that the angle P is set in the range of +5° to +25°.

Further, for a display, it is proved that the range of 10° to 20° is preferable when the values of driving voltage showing the maximum transmissivity shown in Fig. 10 are compared even if the angle P is set in the range of 5° to 25° as described above because it is desirable that driving voltage showing the maximum transmissivity is low.

Furthermore, the angle P according to the present invention denotes an angle formed by the longer axis of a liquid crystal molecule and the direction of the length of a linear electrode as shown in Fig. 3 and as a clockwise positive value and a counterclockwise negative value in Fig. 3 are equal, the relationship shown in Fig. 10 is the same even if an orientation deflection angle is negative.

Fig. 11 shows the relationship between driving voltage ($V_{th}$) and an angle P in case a transmissivity is 10%, ratio γ' of the transmissivity of 90% and that of 10% and the value of ($\gamma' = V_{90}/V_{10}$), it is clear that the higher the value of the angle P is, the more driving voltage is reduced and it is also clear that the higher the value of the angle P is, the higher the value of γ is and it is advantageous to display gradation. It is proved that in view of the result shown in Fig. 11, even if the value of an orientation deflection angle is set in the range of 5° to 25°, driving voltage ($V_{th}$) and γ' are balanced in the range of 10° to 20° and the range is preferable.

Fig. 12 shows the result of measuring dependence upon driving voltage in relation to a transmissivity in case the value of an interval between electrodes/ the width of an electrode is 10 (μm)/3 (μm), 15/4, 20/5 and 25/5 when a pre-twist angle is set to 0° and an orientation deflection angle is set to 10°.

It is clear in view of the result shown in Fig. 12 that the narrower an interval between electrodes is, the more driving voltage can be reduced and that driving voltage can be readily adjusted in the range of 5 to 10V in the area of the maximum transmissivity by adjusting the value of an interval between electrodes/the width of an electrode.

## Second Embodiment

Another embodiment according to the present invention will be described below.

This embodiment is different from the above embodiment in the direction of orientation processing. The direction of orientation processing for each substrate is the same as in the example of the constitution shown in Fig. 3A, and substrates are joined so that a substrate on the side on which an electrode in the shape of a comb is formed is set to the lower substrate, the orientation of an oriented film provided to the lower substrate is directed so that it is +5° or +10° to the direction of the length of a linear electrode of the lower substrate and the orientation of the oriented film of the upper substrate is directed in the direction of +10° (the homogeneous direction), in the direction of +5° or in the direction of 0° equivalent to the direction of the length of the linear electrode. The values of liquid crystal sealed between substrates and Δnd are the same as those in the above embodiment.

Further, the width of the linear electrode is set to 5 μm, an interval between the linear electrodes is set to 20 μm and the linear electrode is constituted by ITO.

Next, two polarizing plates are prepared and are arranged on the surface of the upper substrate and the rear of the lower substrate so that they have the relationship shown in Fig. 4. In this case, an angle P is set to +5° or +10° and the angle of a pre-twist is set to 0°, +5° or +10°.

Fig. 13 shows the result of measuring the relationship between a transmissivity and driving voltage in case an interval between electrodes is set to 20 μm, the width of an electrode is set to 5 μm, a pre-twist angle is set to 0°, +5° or +10° and an orientation deflection angle is set to 5° and 10°. In this example, multiple irregularities provided with an inclined face are formed on the respective oriented films of the upper and lower substrates so that a liquid crystal molecule is a little tilted in the direction of the thickness of a liquid crystal layer and raised and as a result, the pre-tilt angle of a liquid crystal molecule is 1°.

In view of the result shown in Fig. 13, the same result as in the above embodiment is also obtained by applying a pre-twist.

It is clear from the above description that a uniform and high transmissivity can be obtained in the large range around a linear electrode by adopting the constitution according to the present invention and further and that if an electrode is formed by ITO, the electrode also transmits a beam of light to some extent and the efficiency in the utilization of light is enhanced.

As described above, according to the present invention, a liquid crystal display device provided with the characteristics of a large angle of visibility wherein further, a transmissivity can be enhanced and driving at low voltage is enabled even if an interval between linear electrodes is relatively narrowed can be realized.

## Claims

1. A liquid crystal display device, comprising:

    a pair of substrates to each of which an oriented film is provided and on which these oriented films are arranged opposite;
    a liquid crystal layer including nematic liquid crystal arranged between these substrates; and
    plural linear electrodes provided on said one substrate in parallel at an interval in the range of 5 to 20 μm under said oriented film provided on said one substrate, wherein:

        said plural linear electrodes are formed so that the longer axis of a liquid crystal molecule on the side close to the substrate on which said linear electrodes are provided out of plural liquid crystal molecules existing in the direction of the thickness of said liquid crystal layer is oriented in the direction of an electric field generated between said plural adjacent linear electrodes when voltage is applied;
        said oriented film on one substrate on which said plural linear electrodes are provided is formed so that the longer axis of a liquid crystal molecule on the side close to the substrate on which said linear electrodes are provided out of plural liquid crystal molecules constituting said liquid crystal layer and the direction of the length of said plural linear electrodes are crossed in the range of angles between 5° and 25° on a plane in parallel to said substrate when no voltage is applied to said plural linear electrodes;
        said oriented film on said other substrate is formed so that the longer axis of a liquid crystal molecule on the side close to said other substrate is tilted and said liquid crystal molecules are oriented in the range of angles within 15° from the direction of the longer axis of said liquid crystal molecule on the side of the linear electrodes to the direction in which said linear electrode is extended and said liquid crystal molecule is oriented when no voltage is applied; and
        the value of Δnd in case the thickness of said liquid crystal layer is set to d and the anisotropy of the refraction index of said liquid crystal layer is set to Δn is in the range of 0.28 to 0.45 μm.

2. A liquid crystal display device according to Claim 1, wherein:

    the longer axis of a liquid crystal molecule on the side close to said other substrate is formed so that the longer axis of a liquid crystal molecule on the side close to said other substrate is tilted in the range of angles between 5° and 10° from the direction of the length of a liquid crystal molecule on the side of the linear electrode to the direction in which said linear electrode is extended and said liquid crystal molecule is oriented.

3. A liquid crystal display device according to Claim 1 or 2, wherein:

    said value of Δnd is in the range of 0.34 to 0.38 μm.

4. A liquid crystal display device according to any of claims 1 to 3, wherein:

said linear electrode, comprises first linear electrodes provided in parallel, and plural second linear electrodes alternately provided with said first linear electrodes in parallel to these first linear electrodes and opposite to each first linear electrode for generating potential in cooperation with these opposite electrodes.

FIG. 1A

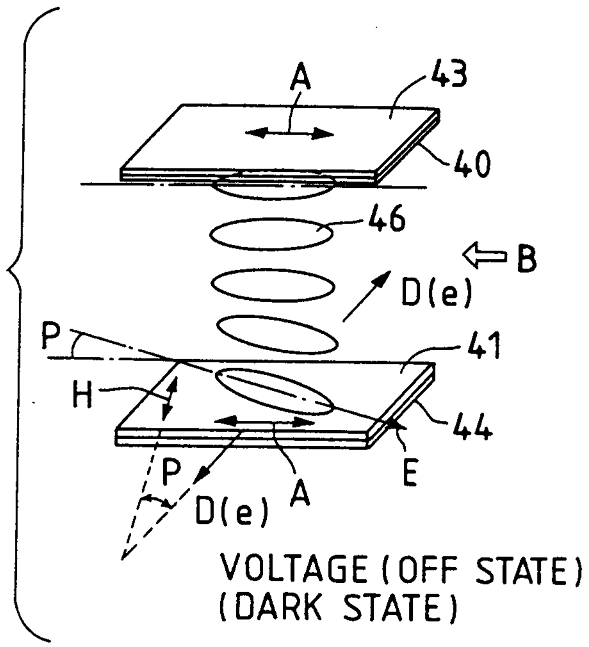


FIG. 1B

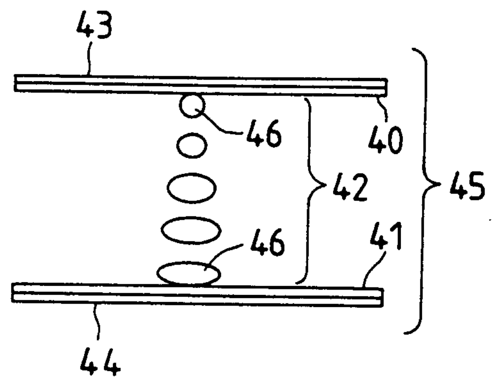


FIG. 2A

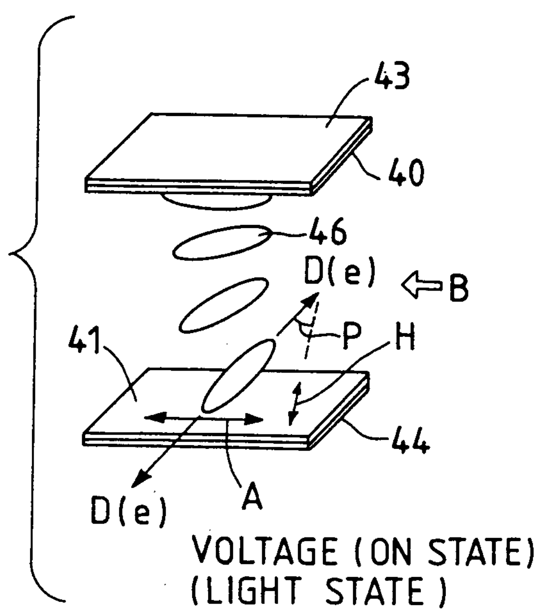


FIG. 2B

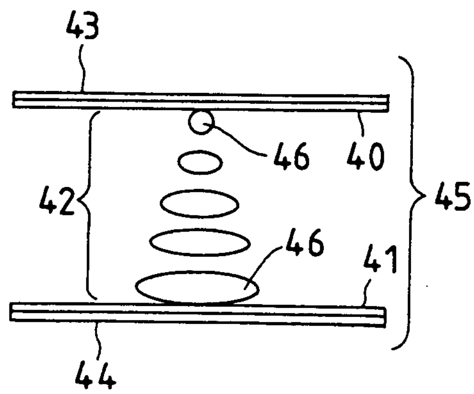

FIG. 3A

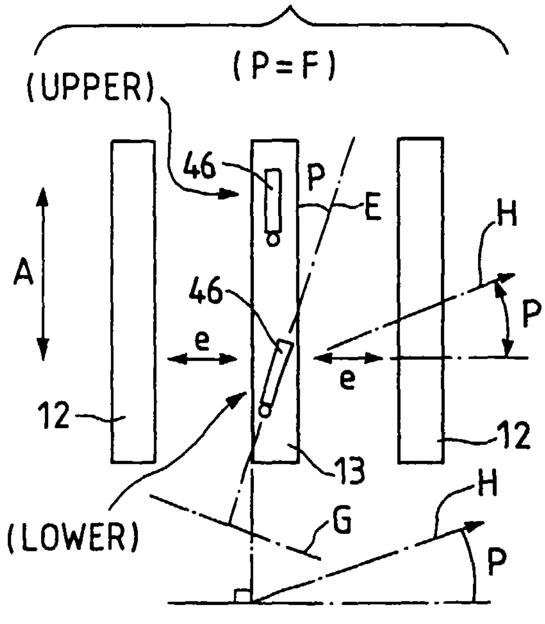
(P=F)
(UPPER)
46
P
E
H
A
46
e
e
P
12
12
13
(LOWER)
G
H
P

FIG. 3B

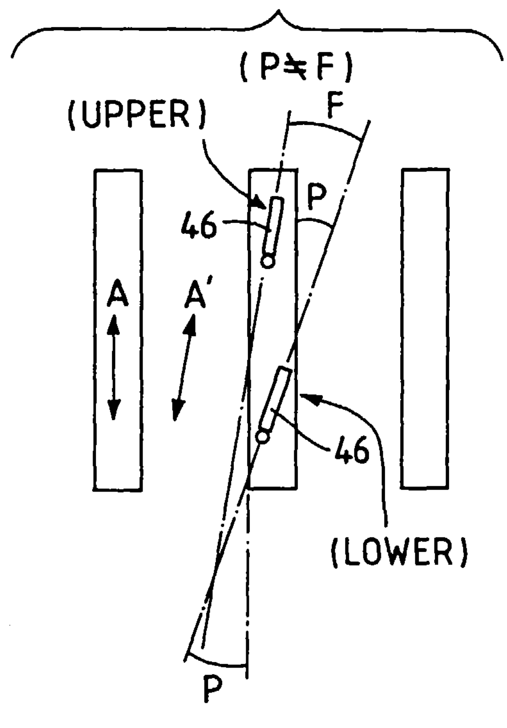
(P≒F)
(UPPER)
F
P
46
A
A'
46
(LOWER)
P

FIG. 4

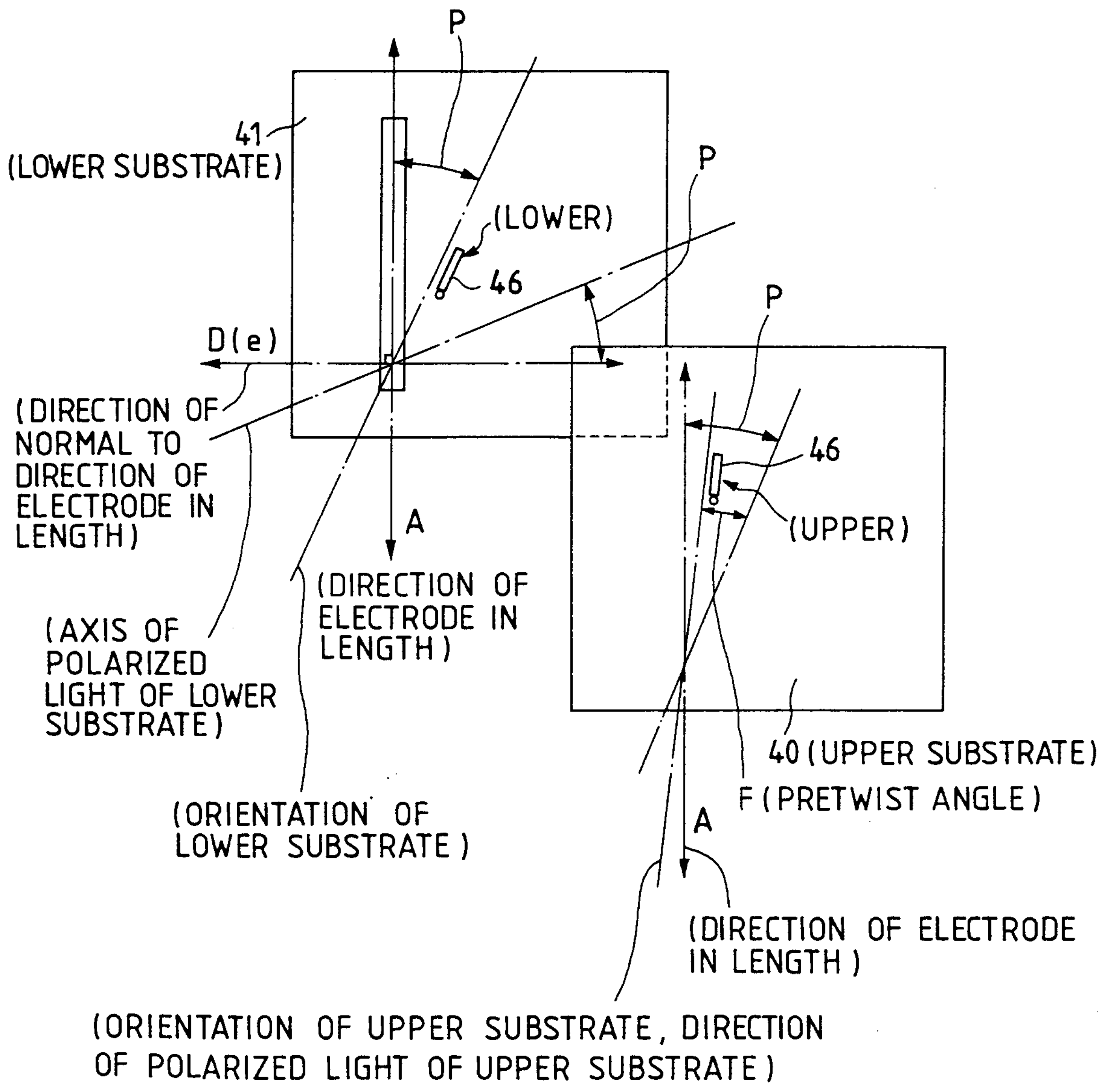
P
41
(LOWER SUBSTRATE)
P
(LOWER)
46
P
D(e)
(DIRECTION OF NORMAL TO DIRECTION OF ELECTRODE IN LENGTH)
46
A
(UPPER)
(DIRECTION OF ELECTRODE IN LENGTH)
(AXIS OF POLARIZED LIGHT OF LOWER SUBSTRATE)
40 (UPPER SUBSTRATE)
F (PRETWIST ANGLE)
(ORIENTATION OF LOWER SUBSTRATE)
A
(DIRECTION OF ELECTRODE IN LENGTH)
(ORIENTATION OF UPPER SUBSTRATE, DIRECTION OF POLARIZED LIGHT OF UPPER SUBSTRATE)

FIG. 5

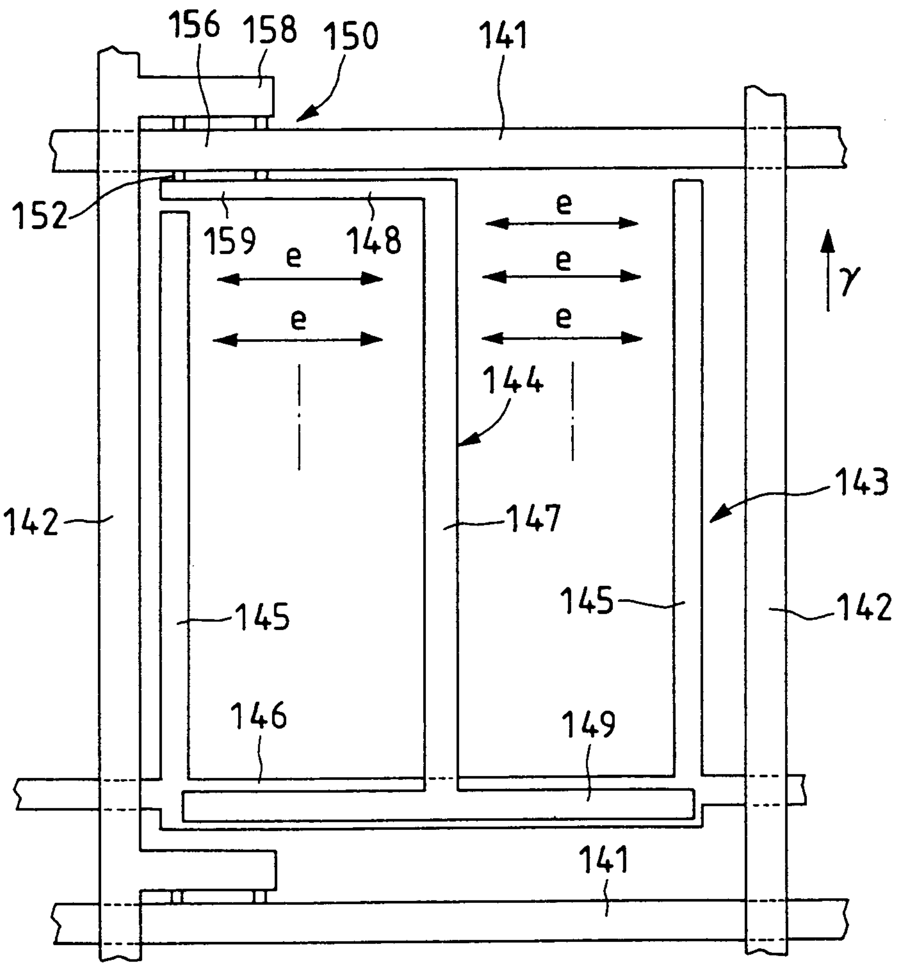
156
158
150
141
152
159
148
e
e
e
e
e
γ
144
143
142
147
145
145
142
146
149
141

FIG. 6

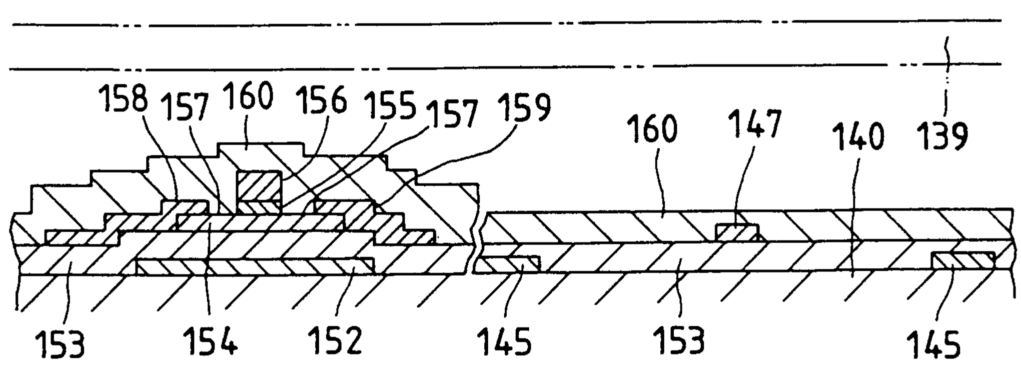
158
157
160
156
155
157
159
160
147
140
139
153
154
152
145
153
145

FIG. 7

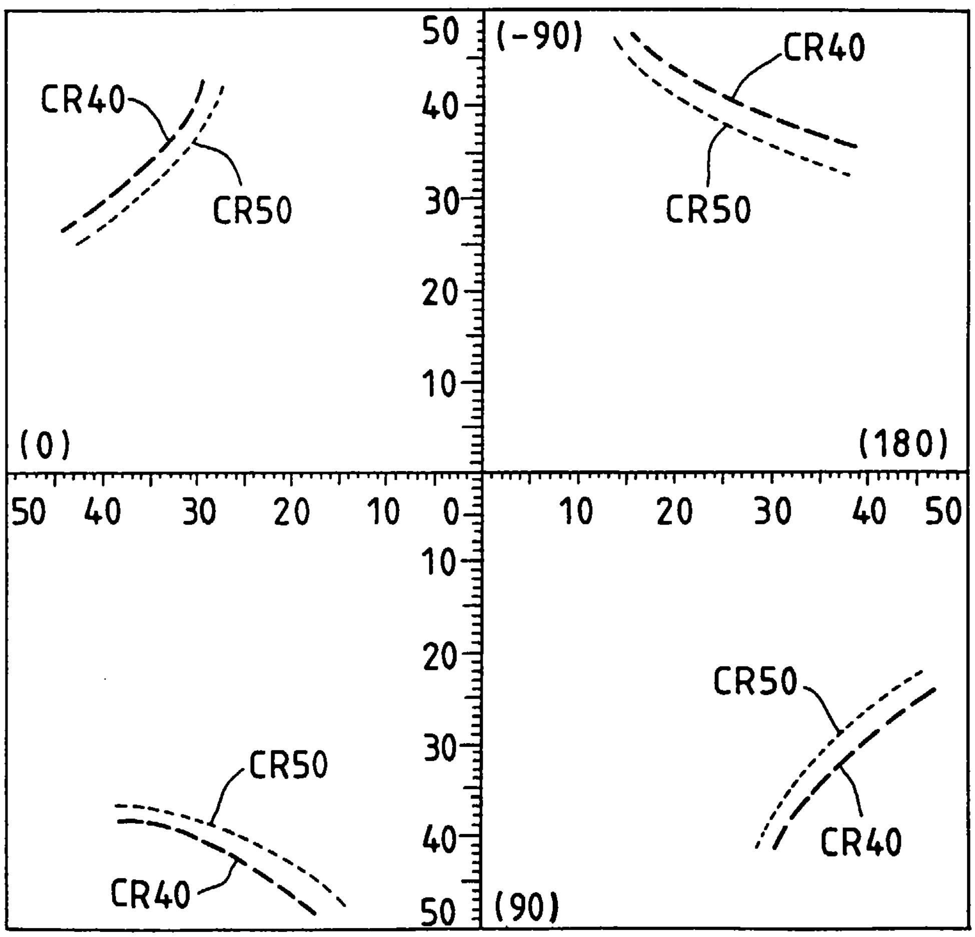
(0)
(-90)
(180)
(90)
CR40
CR50
CR40
CR50
CR50
CR40
CR50
CR40
50
40
30
20
10
0
10
20
30
40
50

FIG. 8

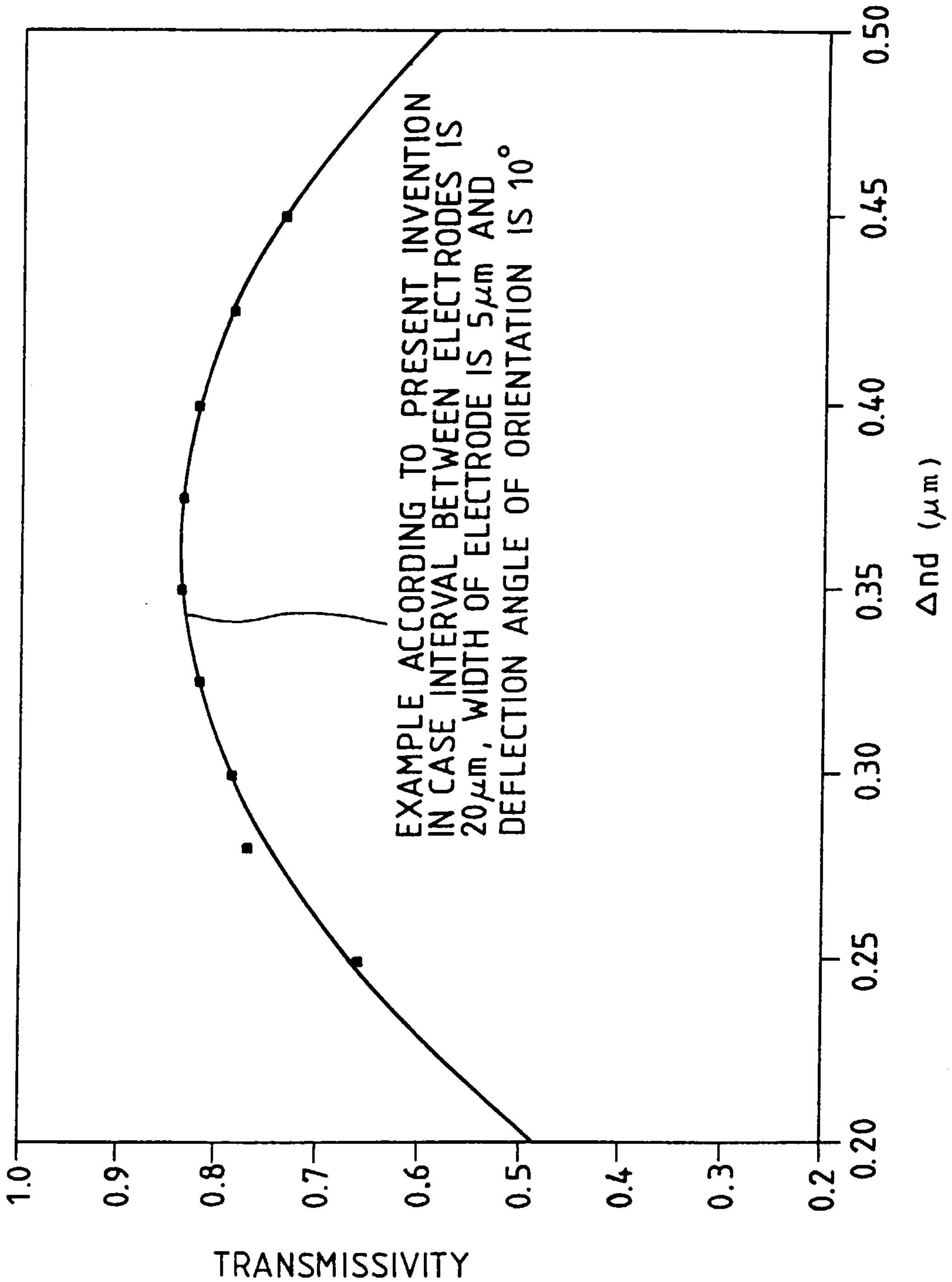
EXAMPLE ACCORDING TO PRESENT INVENTION IN CASE INTERVAL BETWEEN ELECTRODES IS 20μm, WIDTH OF ELECTRODE IS 5μm AND DEFLECTION ANGLE OF ORIENTATION IS 10°
TRANSMISSIVITY
1.0
0.9
0.8
0.7
0.6
0.5
0.4
0.3
0.2
0.20
0.25
0.30
0.35
0.40
0.45
0.50
Δnd (μm)

FIG. 9

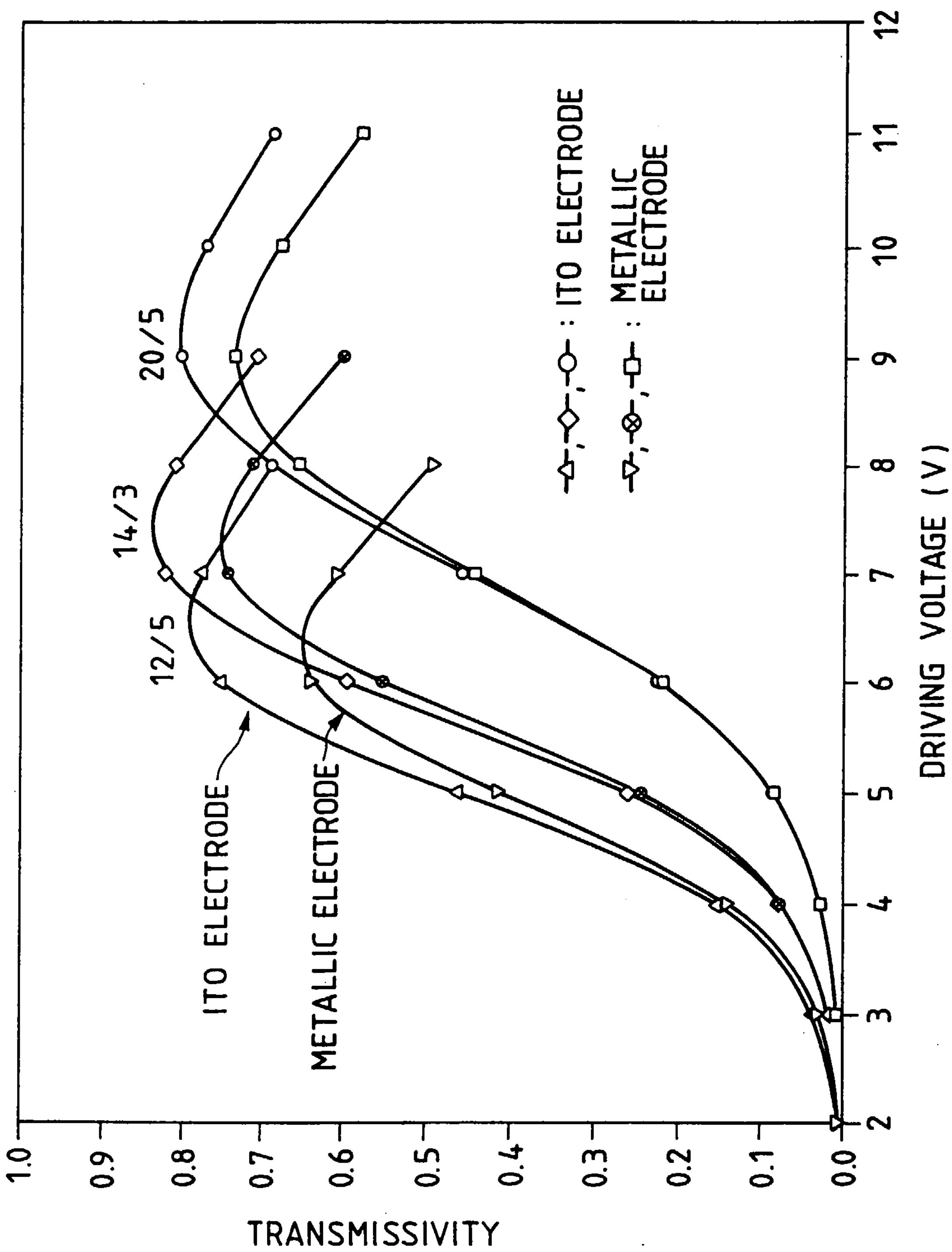
TRANSMISSIVITY
1.0
0.9
0.8
0.7
0.6
0.5
0.4
0.3
0.2
0.1
0.0
DRIVING VOLTAGE (V)
2
3
4
5
6
7
8
9
10
11
12
12/5
14/3
20/5
ITO ELECTRODE
METALLIC ELECTRODE
: ITO ELECTRODE
: METALLIC ELECTRODE

FIG. 10

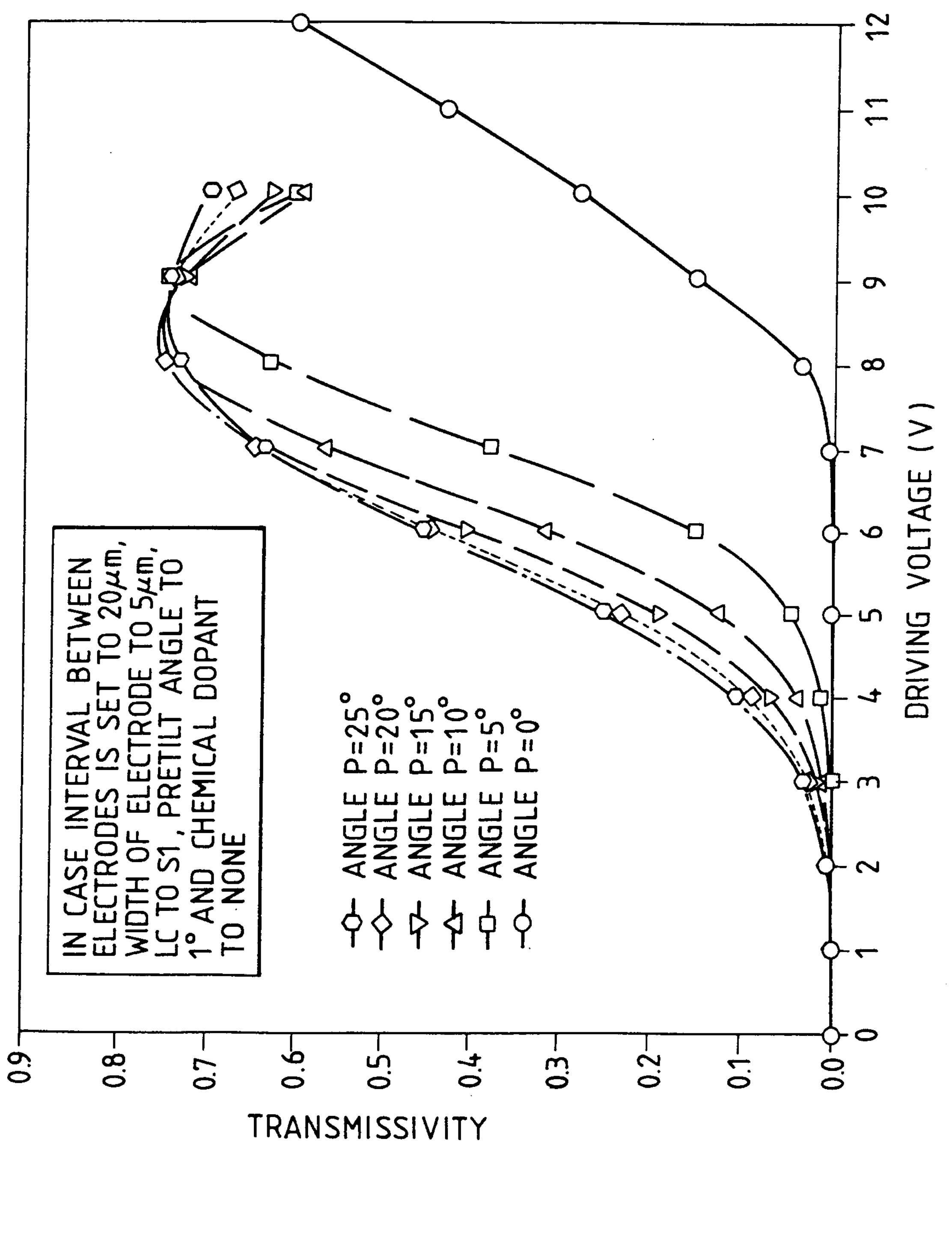
IN CASE INTERVAL BETWEEN ELECTRODES IS SET TO 20μm, WIDTH OF ELECTRODE TO 5μm, LC TO S1, PRETILT ANGLE TO 1° AND CHEMICAL DOPANT TO NONE
ANGLE P=25°
ANGLE P=20°
ANGLE P=15°
ANGLE P=10°
ANGLE P=5°
ANGLE P=0°
TRANSMISSIVITY
0.0
0.1
0.2
0.3
0.4
0.5
0.6
0.7
0.8
0.9
DRIVING VOLTAGE (V)
0
1
2
3
4
5
6
7
8
9
10
11
12

FIG. 11

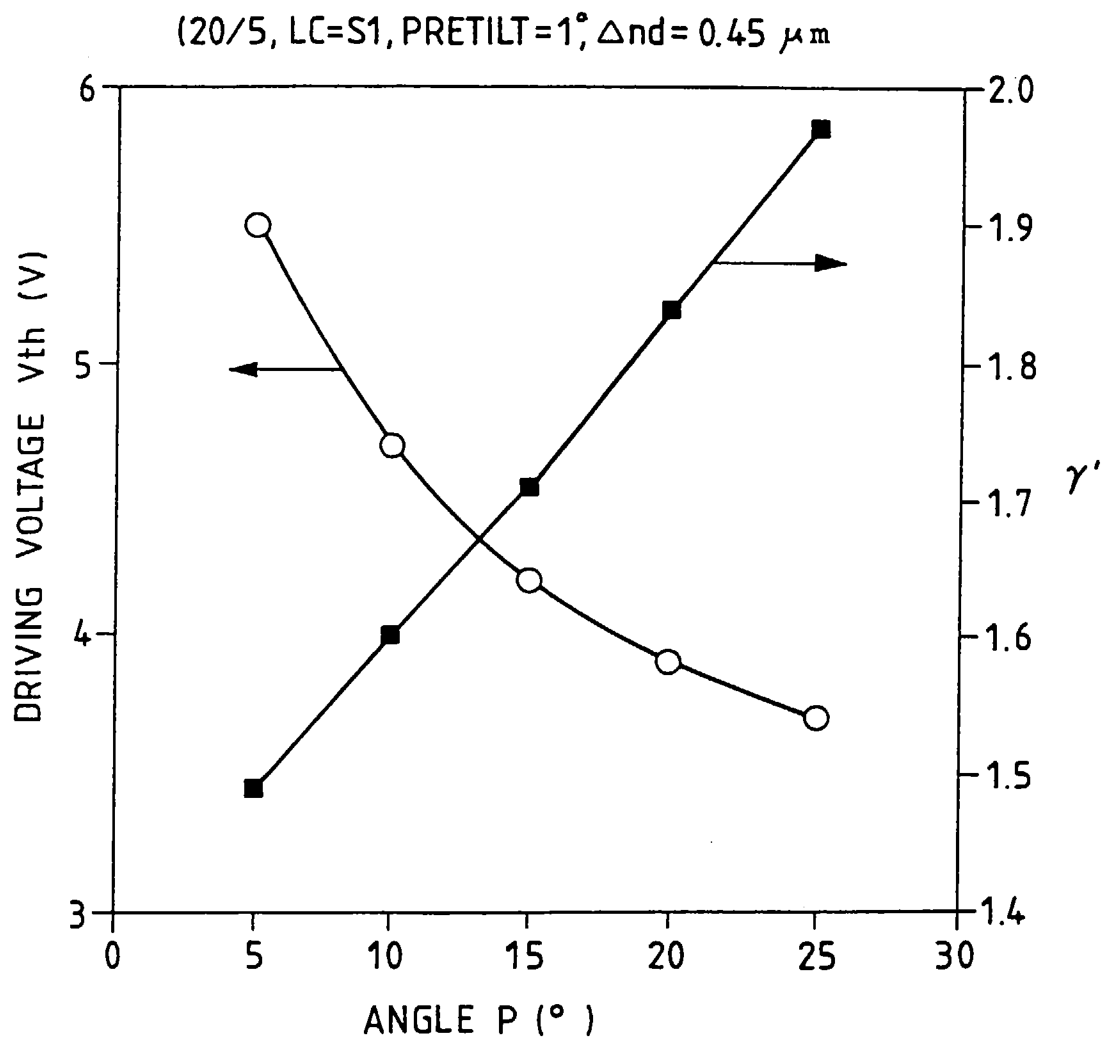
(20/5, LC=S1, PRETILT=1°, Δnd= 0.45 μm
DRIVING VOLTAGE Vth (V)
γ'
ANGLE P (° )
6
5
4
3
2.0
1.9
1.8
1.7
1.6
1.5
1.4
0
5
10
15
20
25
30

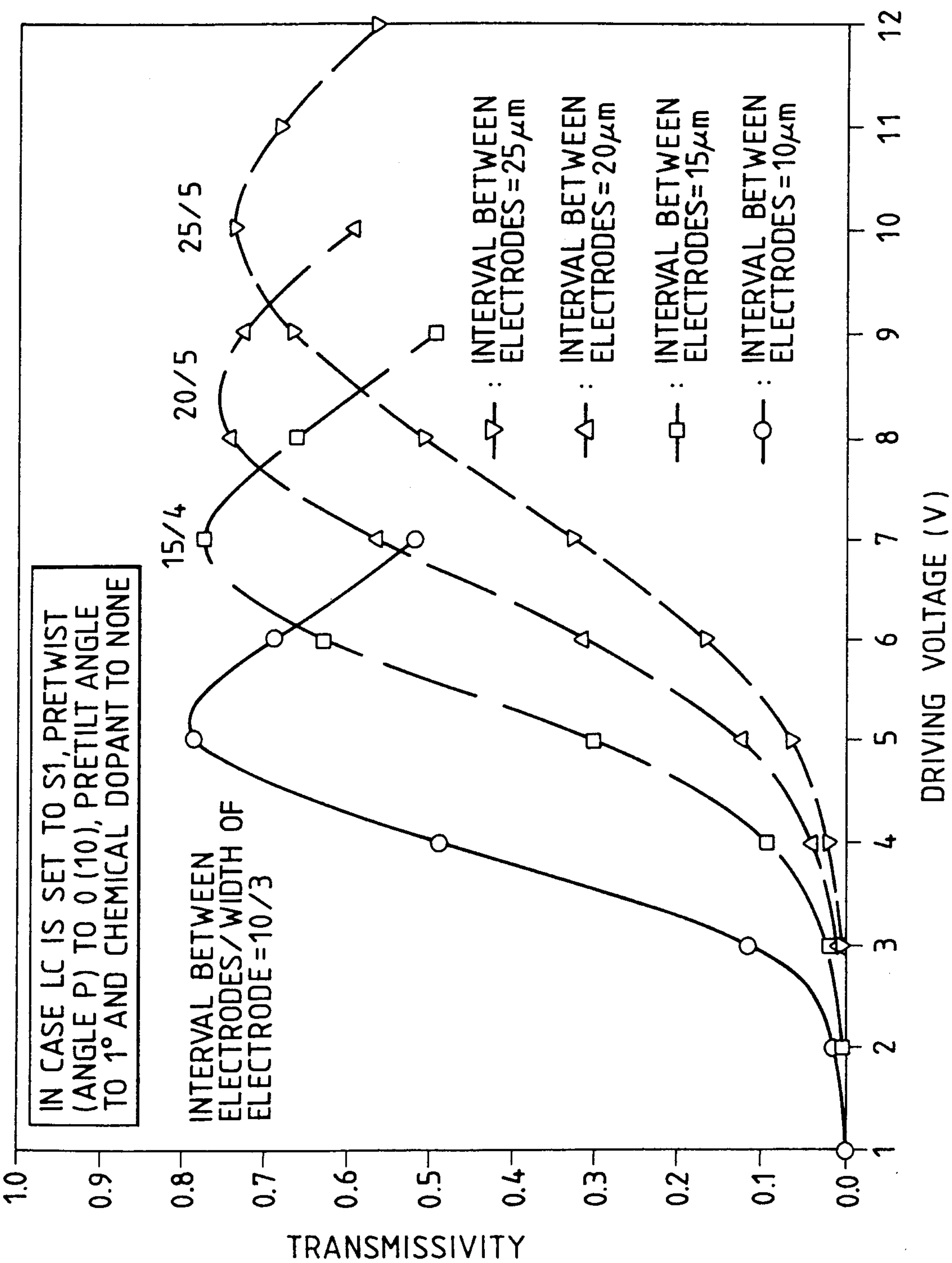
IN CASE LC IS SET TO S1, PRETWIST (ANGLE P) TO 0 (10), PRETILT ANGLE TO 1° AND CHEMICAL DOPANT TO NONE
INTERVAL BETWEEN ELECTRODES/WIDTH OF ELECTRODE =10/3
15/4
20/5
25/5
INTERVAL BETWEEN ELECTRODES=25μm
INTERVAL BETWEEN ELECTRODES=20μm
INTERVAL BETWEEN ELECTRODES=15μm
INTERVAL BETWEEN ELECTRODES=10μm
TRANSMISSIVITY
1.0
0.9
0.8
0.7
0.6
0.5
0.4
0.3
0.2
0.1
0.0
1
2
3
4
5
6
7
8
9
10
11
12
DRIVING VOLTAGE (V)

FIG. 12

FIG. 13

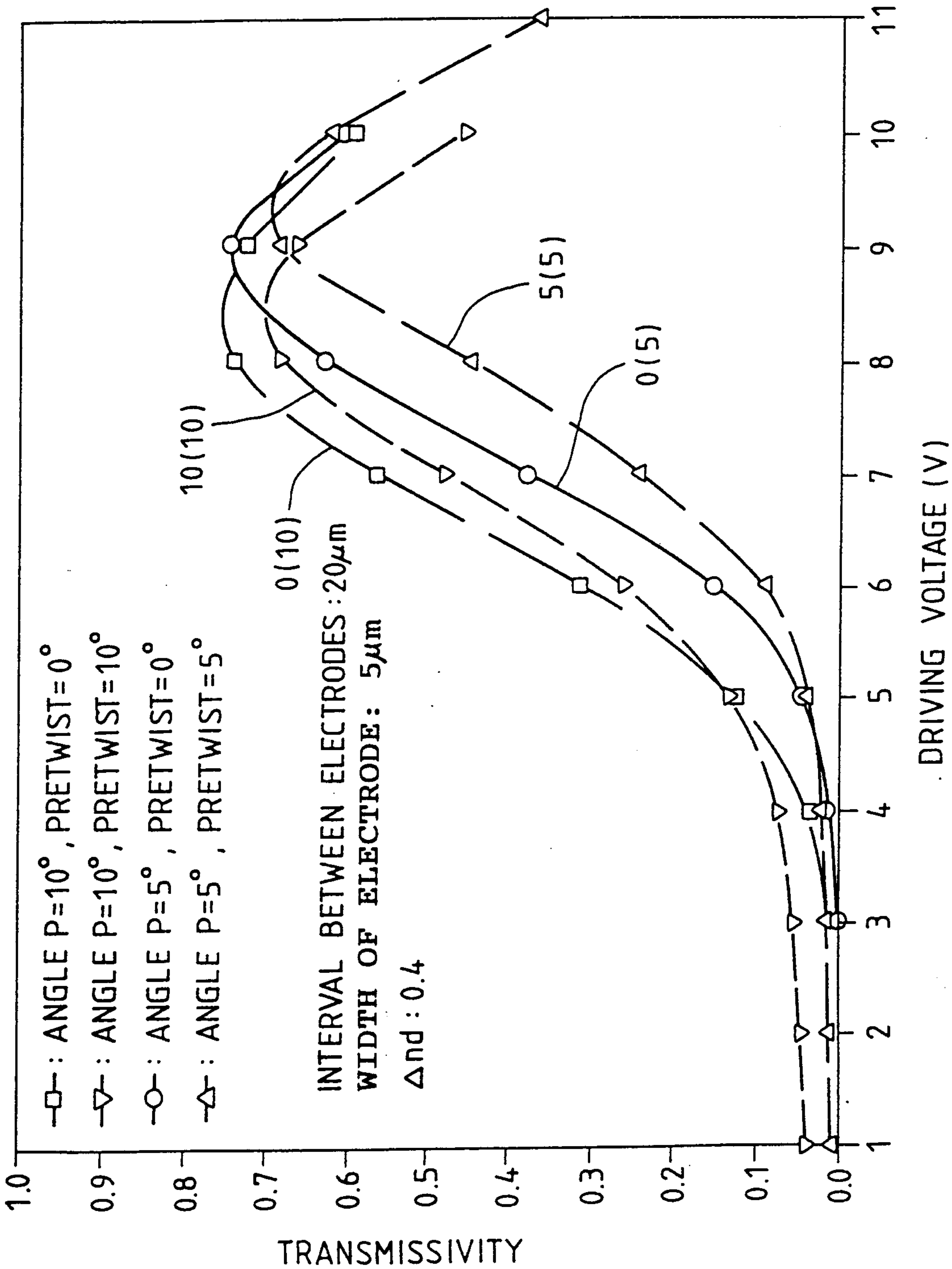
□ : ANGLE P=10°, PRETWIST=0°
▽ : ANGLE P=10°, PRETWIST=10°
○ : ANGLE P=5°, PRETWIST=0°
◁ : ANGLE P=5°, PRETWIST=5°
INTERVAL BETWEEN ELECTRODES : 20μm
WIDTH OF ELECTRODE : 5μm
Δnd : 0.4
10(10)
0(10)
0(5)
5(5)
TRANSMISSIVITY
DRIVING VOLTAGE (V)
1.0
0.9
0.8
0.7
0.6
0.5
0.4
0.3
0.2
0.1
0.0
1
2
3
4
5
6
7
8
9
10
11

FIG. 14

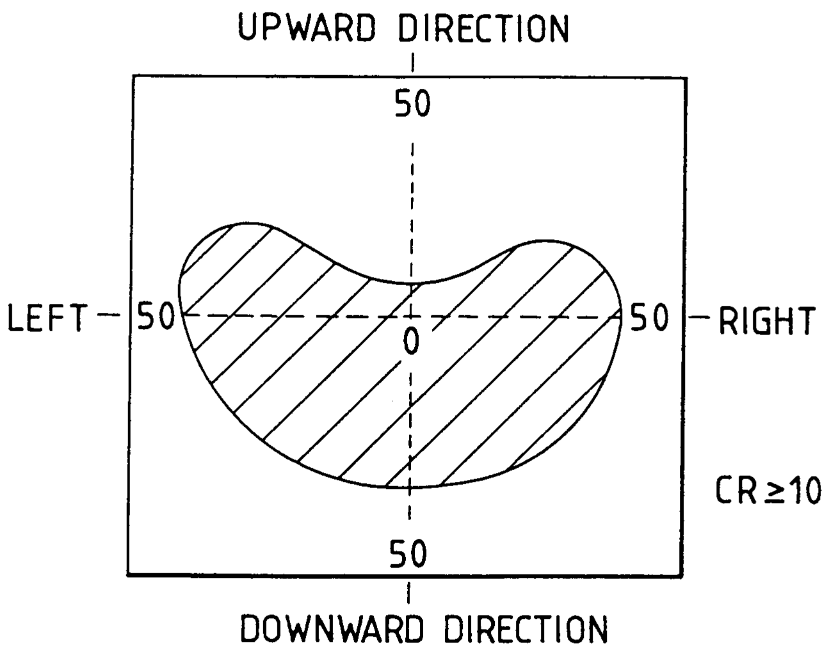
UPWARD DIRECTION
50
LEFT
50
0
50
RIGHT
CR≥10
50
DOWNWARD DIRECTION

FIG. 15

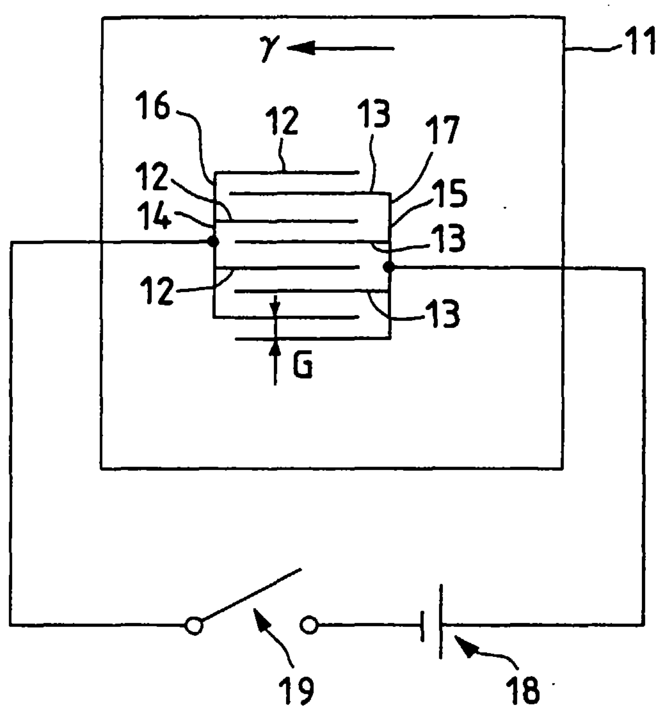


FIG. 16

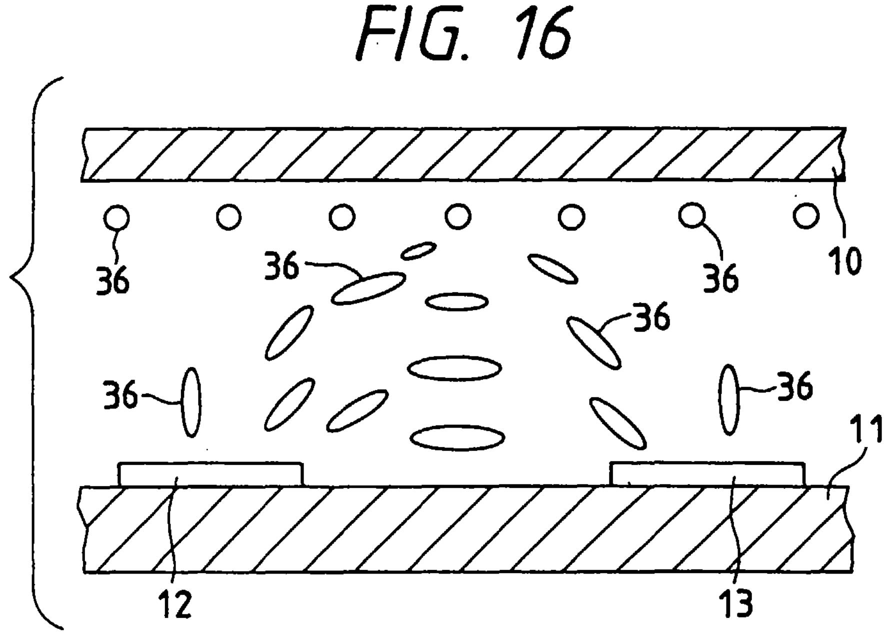

FIG. 17A

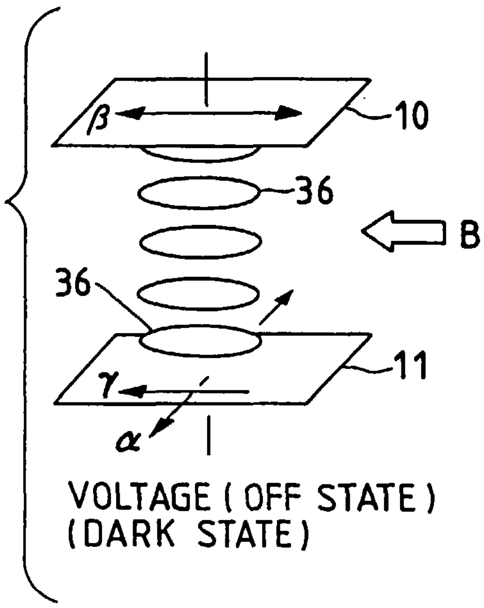


FIG. 17B

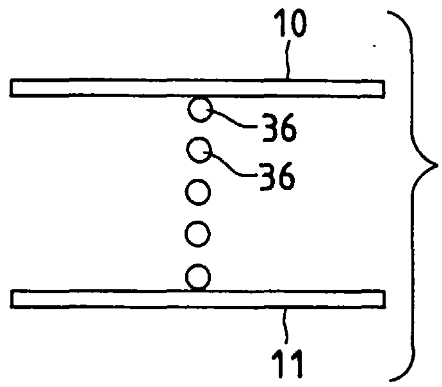


FIG. 18A

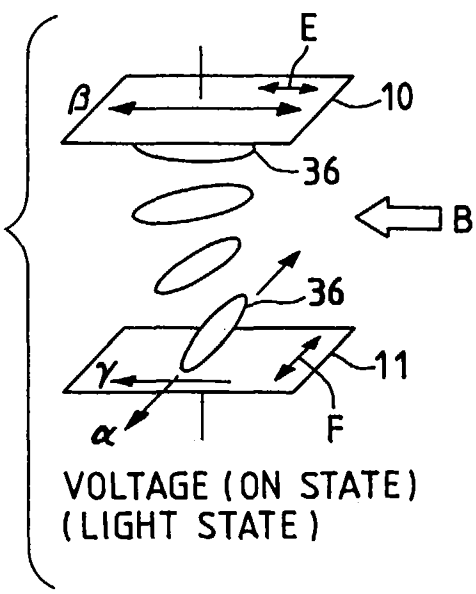


FIG. 18B